# EUROPEAN PATENT SPECIFICATION

(11) **EP 3 219 103 B1**
(45) Date of publication and mention of the grant of the patent: **02.09.2020**
(21) Application number: 15801022.3
(22) Date of filing: 06.11.2015
(51) Int. Cl.: H04N 19/103, H04N 19/176, H04N 19/136, H04N 19/157

(54) **ALTERNATING BLOCK CONSTRAINED DECISION MODE CODING**
CODIERUNG DURCH EINGESCHRÄNKTE ENTSCHEIDUNGEN ALTERNIERENDER BLÖCKE
CODAGE EN MODE DE DÉCISION RESTREINTE PAR BLOCS ALTERNÉS

(30) Priority: 13.11.2014 US 201414540083
(43) Date of publication of application: 20.09.2017
(73) Proprietor: Google LLC, Mountain View, CA 94043 (US)
(72) Inventor: HAN, Jingning, Mountain View, California 94043 (US); XU, Yaowu, Mountain View, California 94043 (US)
(74) Representative: Robinson, David Edward Ashdown
(86) International application number: PCT/US2015/059547
(87) International publication number: WO 2016/077179

(56) References cited:
- US-B1- 8 774 272
- STEFAAN MYS ET AL: "DYNAMIC COMPLEXITY CODING: COMBINING PREDICTIVE AND DISTRIBUTED VIDEO CODING (Abstract)", 26. PICTURE CODING SYMPOSIUM;7-11-2007 - 9-11-2007; LISBON,, 7 November 2007 (2007-11-07), XP030080400,

## Description

### Background

Digital video can be used, for example, for remote business meetings via video conferencing, high definition video entertainment, video advertisements, or sharing of user-generated videos. Due to the large amount of data involved in video data, high performance compression is needed for transmission and storage.

STEFAAN MYS ET AL: "DYNAMIC COMPLEXITY CODING: COMBINING PREDICTIVE AND DISTURBED VIDEO CODING (Abstract)", 26. PICTURE CODING SYMPOSIUM; 7-11-2007 - 9-11-2007; LISBON,, 7 November 2007 (2007-11-07), describes combining conventional predictive coding techniques in distributed video coding concepts to create a codec that is able to adapt to the possibly varying complexity constraints imposed on both encoding and decoding.

US 8,774,272 describes an encoding mode determination for inter-frame encoding blocks according to the frame position in a group of pictures.

### Summary

This disclosure relates to encoding and decoding of video stream data for transmission or storage and, more particularly, to aspects of systems, methods, and apparatuses for encoding and decoding using alternating block constrained decision mode coding.

An example is a method for video coding using alternating block constrained decision mode coding. Video coding using alternating block constrained decision mode coding may include identifying a current block of a current frame of an input video stream, generating an encoded block by encoding the current block using alternating block constrained decision mode coding, wherein alternating block constrained decision mode coding includes encoding the current block as a constrained decision mode coded block on a condition that a previously coded immediately adjacent block is an unconstrained decision mode coded block, including the encoded block in an output bitstream, and transmitting or storing the output bitstream.

In some examples, video coding using alternating block constrained decision mode coding may include identifying a current block of a current frame of an input video stream, and generating an encoded block by encoding the current block using alternating block constrained decision mode coding, wherein alternating block constrained decision mode coding includes encoding the current block as a constrained decision mode coded block on a condition that a first previously coded immediately adjacent block is an unconstrained decision mode coded block and a second previously coded immediately adjacent block is an unconstrained decision mode coded block. In some implementations, video coding using alternating block constrained decision mode coding may include including the encoded block in an output bitstream, and transmitting or storing the output bitstream.

In accordance with an aspect of the present invention, there is provided a method, as described in claim 1.

In some implementations, video coding using alternating block constrained decision mode coding includes identifying a current block of a current frame of an input video stream, and generating, by a processor in response to instructions stored on a non-transitory computer readable medium, an encoded block by encoding the current block using alternating block constrained decision mode coding. Using alternating block constrained decision mode coding may also include encoding the current block as a constrained decision mode coded block on a condition that a first previously coded immediately adjacent block is an unconstrained decision mode coded block, wherein the first previously coded immediately adjacent block is a previously coded block spatially immediately to the left of the current block in the current frame, a second previously coded immediately adjacent block is an unconstrained decision mode coded block, wherein the second previously coded immediately adjacent block is a previously coded block spatially immediately above the current block in the current frame, and a third previously coded immediately adjacent block is an unconstrained decision mode coded block, wherein the third previously coded immediately adjacent block is spatially concurrent with the current block and the third previously coded immediately adjacent block is from a temporally immediately adjacent previously coded frame. Further, encoding the current block using a prediction filter identified based on the first previously coded immediately adjacent block and the second previously coded immediately adjacent block and encoding the current block using a coding block size range identified block based on the first previously coded immediately adjacent block, the second previously coded immediately adjacent block, and the third previously coded immediately adjacent block, can also be included. In some implementations, the encoded block is included in an output bitstream, and transmitting or storing the output bitstream may occur.

Variations in these and other aspects will be described in additional detail hereafter.

### BRIEF DESCRIPTION OF THE DRAWINGS

The description herein makes reference to the accompanying drawings wherein like reference numerals refer to like parts throughout the several views, and wherein:
FIG. 1 is a diagram of a computing device in accordance with implementations of this disclosure;
FIG. 2 is a diagram of a computing and communications system in accordance with implementations of this disclosure;
FIG. 3 is a diagram of a video stream for use in encoding and decoding in accordance with implementations of this disclosure;
FIG. 4 is a block diagram of an encoder in accordance with implementations of this disclosure;
FIG. 5 is a block diagram of a decoder in accordance with implementations of this disclosure;
FIG. 6 is a block diagram of a representation of a portion of a frame in accordance with implementations of this disclosure;
FIG. 7 is a diagram of an example of a representation of frames using spatial and temporal alternating block constrained mode video coding in accordance with implementations of this disclosure; and
FIG. 8 is a diagram of an example of a method of spatial and temporal alternating block constrained mode video coding in accordance with implementations of this disclosure.

### DETAILED DESCRIPTION

Digital video streams may represent video using a sequence of frames or images. Each frame can include a number of blocks, which may include information indicating pixel attributes, such as color values or brightness. Transmission and storage of video can use significant computing or communications resources. Compression and other coding techniques may be used to reduce the amount of data in video streams. In this way, high resolution video may be transmitted over communications channels having limited bandwidth.

Encoding a video stream, or a portion thereof, such as a frame or a block, can include using temporal and spatial similarities in the video stream to improve coding efficiency. For example, video coding may include predicting pixel values based on temporal and spatial similarities between pixels. Block-based coding involves dividing a frame into a grid or matrix of blocks and coding each block as a unit. Coding includes evaluating many candidate coding modes, such as intra-coding and inter-coding modes, to identify the optimal coding mode, which may be the coding mode that minimizes an error metric, such as a rate-distortion metric. Evaluating multiple candidate coding modes utilizes significant resources, increases complexity, and may ignore inter-block coding mode correlation.

Alternating block constrained decision mode coding uses inter-block coding mode correlation to reduce complexity and increase coding efficiency. For example, alternating block constrained decision mode coding includes alternating, on a block basis, between an unconstrained coding mode search and a constrained context adaptive coding mode search. A current block from a current frame is based on one or more spatially and temporally adjacent blocks. Identifying a prediction filter for generating a motion compensated prediction block for encoding the current block can be identified, as can a coding block size range for encoding the current block.

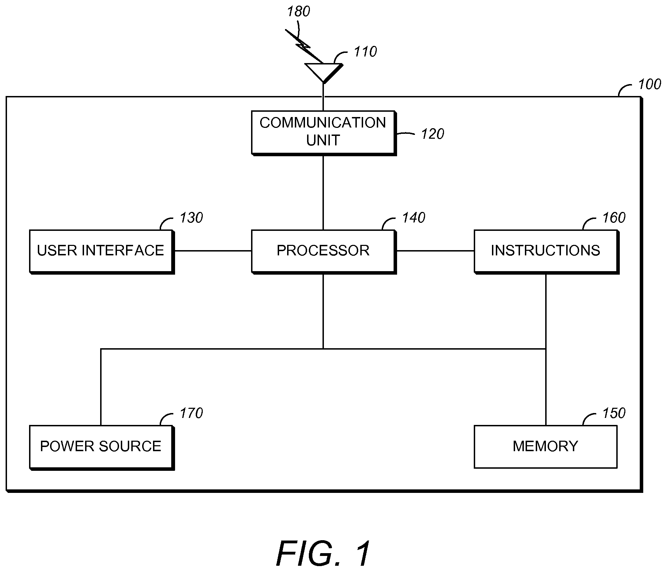

FIG. 1 is a diagram of a computing device 100 in accordance with implementations of this disclosure. A computing device 100 can include a communication interface 110, a communication unit 120, a user interface (UI) 130, a processor 140, a memory 150, instructions 160, a power source 170, or any combination thereof. As used herein, the term "computing device" includes any unit, or combination of units, capable of performing any method, or any portion or portions thereof, disclosed herein.

Computing device 100 may be a stationary computing device, such as a personal computer (PC), a server, a workstation, a minicomputer, or a mainframe computer; or a mobile computing device, such as a mobile telephone, a personal digital assistant (PDA), a laptop, or a tablet PC. Although shown as a single unit, any one or more element of the communication device 100 can be integrated into any number of separate physical units. For example, UI 130 and processor 140 can be integrated in a first physical unit and memory 150 can be integrated in a second physical unit.

Communication interface 110 can be a wireless antenna, as shown, a wired communication port, such as an Ethernet port, an infrared port, a serial port, or any other wired or wireless unit capable of interfacing with a wired or wireless electronic communication medium 180.

Communication unit 120 can be configured to transmit or receive signals via wired or wireless medium 180. For example, as shown, communication unit 120 is operatively connected to an antenna configured to communicate via wireless signals. Although not explicitly shown in FIG. 1, communication unit 120 can be configured to transmit, receive, or both via any wired or wireless communication medium, such as radio frequency (RF), ultra violet (UV), visible light, fiber optic, wire line, or a combination thereof. Although FIG. 1 shows a single communication unit 120 and a single communication interface 110, any number of communication units and any number of communication interfaces can be used.

UI 130 can include any unit capable of interfacing with a user, such as a virtual or physical keypad, a touchpad, a display, a touch display, a speaker, a microphone, a video camera, a sensor, or any combination thereof. UI 130 can be operatively coupled with the processor, as shown, or with any other element of communication device 100, such as the power source 170. Although shown as a single unit, UI 130 may include one or more physical units. For example, UI 130 may include an audio interface for performing audio communication with a user, and a touch display for performing visual and touch based communication with the user. Although shown as separate units, communication interface 110, communication unit 120, and UI 130, or portions thereof, may be configured as a combined unit. For example, communication interface 110, communication unit 120, and UI 130 may be implemented as a communications port capable of interfacing with an external touchscreen device.

Processor 140 can include any device or system capable of manipulating or processing a signal or other information now-existing or hereafter developed, including optical processors, quantum processors, molecular processors, or a combination thereof. For example, processor 140 can include a general purpose processor, a special purpose processor, a conventional processor, a digital signal processor (DSP), a plurality of microprocessors, one or more microprocessor in association with a DSP core, a controller, a microcontroller, an Application Specific Integrated Circuit (ASIC), a Field Programmable Gate Array (FPGA), a programmable logic array, programmable logic controller, microcode, firmware, any type of integrated circuit (IC), a state machine, or any combination thereof. As used herein, the term "processor" includes a single processor or multiple processors. Processor 140 can be operatively coupled with communication interface 110, communication unit 120, UI 130, memory 150, instructions 160, power source 170, or any combination thereof.

Memory 150 can include any non-transitory computer-usable or computer-readable medium, such as any tangible device that can, for example, contain, store, communicate, or transport instructions 160, or any information associated therewith, for use by or in connection with processor 140. The non-transitory computer-usable or computer-readable medium can be, for example, a solid state drive, a memory card, removable media, a read only memory (ROM), a random access memory (RAM), any type of disk including a hard disk, a floppy disk, an optical disk, a magnetic or optical card, an application specific integrated circuits (ASICs), or any type of non-transitory media suitable for storing electronic information, or any combination thereof. Memory 150 can be connected to processor 140 through, for example, a memory bus (not explicitly shown).

Instructions 160 can include directions for performing any method, or any portion or portions thereof, disclosed herein. Instructions 160 can be realized in hardware, software, or any combination thereof. For example, instructions 160 may be implemented as information stored in memory 150, such as a computer program, that may be executed by processor 140 to perform any of the respective methods, algorithms, aspects, or combinations thereof, as described herein. Instructions 160, or a portion thereof, may be implemented as a special purpose processor, or circuitry, that can include specialized hardware for carrying out any of the methods, algorithms, aspects, or combinations thereof, as described herein. Portions of instructions 160 can be distributed across multiple processors on the same machine or different machines or across a network such as a local area network, a wide area network, the Internet, or a combination thereof.

Power source 170 can be any suitable device for powering communication device 110. For example, power source 170 can include a wired power source; one or more dry cell batteries, such as nickel-cadmium (NiCd), nickel-zinc (NiZn), nickel metal hydride (NiMH), lithium-ion (Li-ion); solar cells; fuel cells; or any other device capable of powering communication device 110. Communication interface 110, communication unit 120, UI 130, processor 140, instructions 160, memory 150, or any combination thereof, can be operatively coupled with power source 170.

Although shown as separate elements, communication interface 110, communication unit 120, UI 130, processor 140, instructions 160, power source 170, memory 150, or any combination thereof can be integrated in one or more electronic units, circuits, or chips.

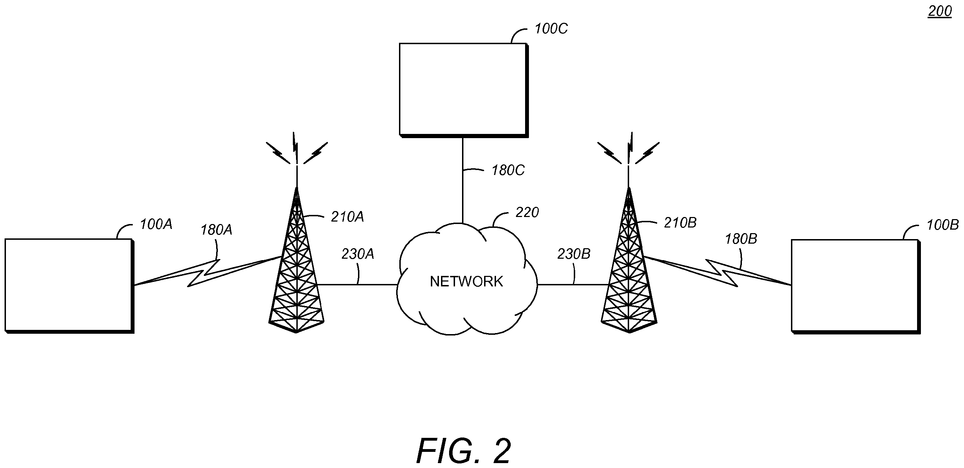

FIG. 2 is a diagram of a computing and communications system 200 in accordance with implementations of this disclosure. Computing and communications system 200 may include one or more computing and communication devices 100A/100B/100C, one or more access points 210A/210B, one or more networks 220, or a combination thereof. For example, computing and communication system 200 can be a multiple access system that provides communication, such as voice, data, video, messaging, broadcast, or a combination thereof, to one or more wired or wireless communicating devices, such as computing and communication devices 100A/100B/100C. Although, for simplicity, FIG. 2 shows three computing and communication devices 100A/100B/100C, two access points 210A/210B, and one network 220, any number of computing and communication devices, access points, and networks can be used.

Computing and communication device 100A/100B/100C can be, for example, a computing device, such as computing device 100 shown in FIG. 1. For example, as shown, computing and communication devices 100A/100B are user devices, such as a mobile computing device, a laptop, a thin client, or a smartphone, and computing and communication device 100C is a server, such as a mainframe or a cluster. Although computing and communication devices 100A/100B are described as user devices, and computing and communication device 100C is described as a server, any computing and communication device may perform some or all of the functions of a server, some or all of the functions of a user device, or some or all of the functions of a server and a user device.

Each computing and communication device 100A/100B/100C can be configured to perform wired or wireless communication. For example, a computing and communication device 100A/100B/100C can be configured to transmit or receive wired or wireless communication signals and can include a user equipment (UE), a mobile station, a fixed or mobile subscriber unit, a cellular telephone, a personal computer, a tablet computer, a server, consumer electronics, or any similar device. Although each computing and communication device 100A/100B/100C is shown as a single unit, a computing and communication device can include any number of interconnected elements.

Each access point 210A/210B can be any type of device configured to communicate with a computing and communication device 100A/100B/100C, a network 220, or both via wired or wireless communication links 180A/180B/180C. For example, an access point 210A/210B can include a base station, a base transceiver station (BTS), a Node-B, an enhanced Node-B (eNode-B), a Home Node-B (HNode-B), a wireless router, a wired router, a hub, a relay, a switch, or any similar wired or wireless device. Although each access point 210A/210B is shown as a single unit, an access point can include any number of interconnected elements.

Network 220 can be any type of network configured to provide services, such as voice, data, applications, voice over internet protocol (VoIP), or any other communications protocol or combination of communications protocols, over a wired or wireless communication link. For example, network 220 can be a local area network (LAN), wide area network (WAN), virtual private network (VPN), a mobile or cellular telephone network, the Internet, or any other means of electronic communication. Network 220 can use a communication protocol, such as the transmission control protocol (TCP), the user datagram protocol (UDP), the internet protocol (IP), the real-time transport protocol (RTP) the Hyper Text Transport Protocol (HTTP), or a combination thereof.

Computing and communication devices 100A/100B/100C can communicate with each other via network 220 using one or more a wired or wireless communication links, or via a combination of wired and wireless communication links. For example, as shown, computing and communication devices 100A/100B communicate via wireless communication links 180A/180B, and computing and communication device 100C communicates via a wired communication link 180C. Any of computing and communication devices 100A/100B/100C may communicate using any wired or wireless communication link, or links. For example, a first computing and communication device 100A can communicate via a first access point 210A using a first type of communication link, a second computing and communication device 100B can communicate via a second access point 210B using a second type of communication link, and a third computing and communication device 100C can communicate via a third access point (not shown) using a third type of communication link. Similarly, access points 210A/210B can communicate with network 220 via one or more types of wired or wireless communication links 230A/230B. Although FIG. 2 shows computing and communication devices 100A/100B/100C in communication via network 220, computing and communication devices 100A/100B/100C can communicate with each other via any number of communication links, such as a direct wired or wireless communication link.

Other implementations of computing and communications system 200 are possible. For example, network 220 can be an ad-hock network and can omit one or more of access points 210A/210B. Computing and communications system 200 may include devices, units, or elements not shown in FIG. 2. For example, computing and communications system 200 may include many more communicating devices, networks, and access points.

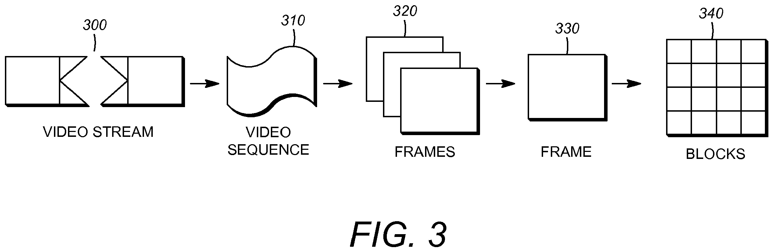

FIG. 3 is a diagram of a video stream 300 for use in encoding and decoding in accordance with implementations of this disclosure. Video stream 300, such as a video stream captured by a video camera or a video stream generated by a computing device, may include a video sequence 310. Video sequence 310 may include a sequence of adjacent frames 320. Although three adjacent frames 320 are shown, video sequence 310 can include any number of adjacent frames 320. Each frame 330 from adjacent frames 320 may represent a single image from the video stream. A frame 330 may include blocks 340. Although not shown in FIG. 3, a block 340 includes pixels. For example, a block can include a 16x16 group of pixels, an 8x8 group of pixels, an 8x16 group of pixels, or any other group of pixels. Unless otherwise indicated herein, the term "block" can include a superblock, a macroblock, a segment, a slice, or any other portion of a frame. A frame, a block, a pixel, or a combination thereof can include display information, such as luminance information, chrominance information, or any other information that can be used to store, modify, communicate, or display the video stream or a portion thereof.

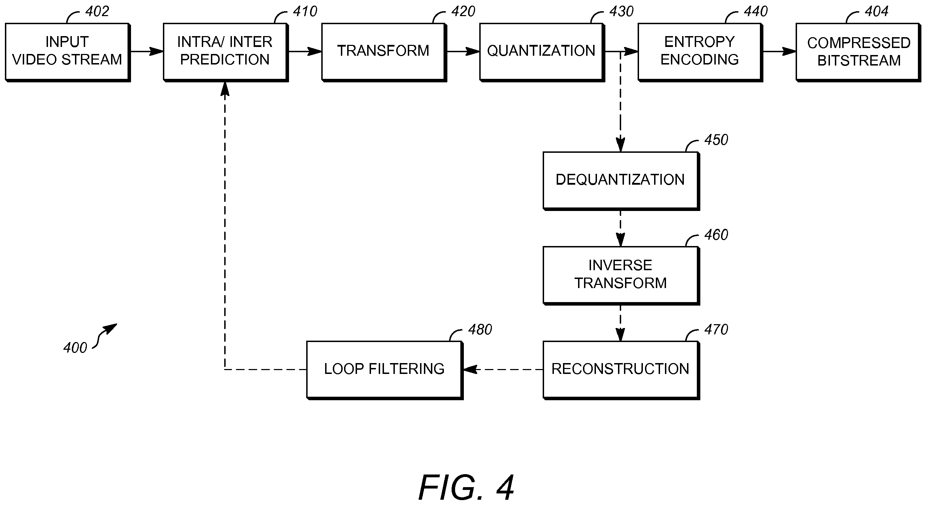

FIG. 4 is a block diagram of an encoder 400 in accordance with implementations of this disclosure. Encoder 400 can be implemented in a device, such as computing device 100 shown in FIG. 1 or computing and communication devices 100A/100B/100C shown in FIG. 2, as, for example, a computer software program stored in a data storage unit, such as memory 150 shown in FIG. 1. The computer software program can include machine instructions that may be executed by a processor, such as processor 160 shown in FIG. 1, and may cause the device to encode video data as described herein. Encoder 400 can be implemented as specialized hardware included, for example, in computing device 100.

Encoder 400 can encode an input video stream 402, such as video stream 300 shown in FIG. 3 to generate an encoded (compressed) bitstream 404. As shown, encoder 400 includes a forward path for generating compressed bitstream 404. The forward path may include an intra/inter prediction unit 410, a transform unit 420, a quantization unit 430, an entropy encoding unit 440, or any combination thereof. In some implementations, encoder 400 includes a reconstruction path (indicated by the broken connection lines) to reconstruct a frame for encoding of further blocks. The reconstruction path of FIG. 4 includes a dequantization unit 450, an inverse transform unit 460, a reconstruction unit 470, a loop filtering unit 480, or any combination thereof. Other structural variations of encoder 400 can be used to encode video stream 402.

For encoding video stream 402, each frame within video stream 402 can be processed in units of blocks. Thus, a current block may be identified from the blocks in a frame, and the current block may be encoded.

At intra/inter prediction unit 410, the current block can be encoded using either intra-frame prediction, which may be within a single frame, or inter-frame prediction, which may be from frame to frame. Intra-prediction may include generating a prediction block from samples in the current frame that have been previously encoded and reconstructed. Inter-prediction may include generating a prediction block from samples in one or more previously constructed reference frames. Generating a prediction block for a current block in a current frame may include performing motion estimation to generate a motion vector indicating an appropriate reference block in the reference frame.

Intra/inter prediction unit 410 may subtract the prediction block from the current block (raw block) to produce a residual block. Transform unit 420 may perform a block-based transform, which includes transforming the residual block into transform coefficients in, for example, the frequency domain. Examples of block-based transforms include the Karhunen-Loève Transform (KLT), the Discrete Cosine Transform (DCT), and the Singular Value Decomposition Transform (SVD). In an example, the DCT includes transforming a block into the frequency domain resulting in transform coefficient values having the lowest frequency (i.e., the DC) coefficient at the top-left of the matrix and the highest frequency coefficient at the bottom-right of the matrix.

Quantization unit 430 may convert the transform coefficients into discrete quantum values, which are referred to as quantized transform coefficients or quantization levels. The quantized transform coefficients can be entropy encoded by the entropy encoding unit 440 to produce entropy-encoded coefficients. Entropy encoding uses a probability distribution metric. The entropy-encoded coefficients and information used to decode the block, which may include the type of prediction used, motion vectors, and quantizer values, can be output to compressed bitstream 404. Compressed bitstream 404 can be formatted using various techniques, such as run-length encoding (RLE) and zero-run coding.

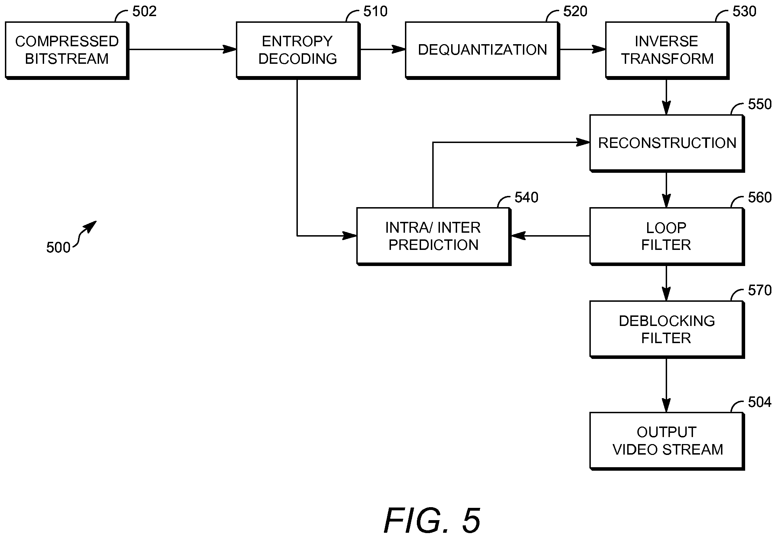

The reconstruction path can be used to maintain reference frame synchronization between encoder 400 and a corresponding decoder, such as decoder 500 shown in FIG. 5. The reconstruction path may be similar to the decoding process discussed below, and may include dequantizing the quantized transform coefficients at dequantization unit 450 and inverse transforming the dequantized transform coefficients at inverse transform unit 460 to produce a derivative residual block. Reconstruction unit 470 may add the prediction block generated by intra/inter prediction unit 410 to the derivative residual block to create a reconstructed block. Loop filtering unit 480 can be applied to the reconstructed block to reduce distortion, such as blocking artifacts.

Other variations of encoder 400 can be used to encode compressed bitstream 404. For example, a non-transform based encoder 400 can quantize the residual block directly without transform unit 420. In some implementations, quantization unit 430 and dequantization unit 450 may be combined into a single unit.

FIG. 5 is a block diagram of a decoder 500 in accordance with implementations of this disclosure. Decoder 500 can be implemented in a device, such as computing device 100 shown in FIG. 1 or computing and communication devices 100A/100B/100C shown in FIG. 2, as, for example, a computer software program stored in a data storage unit, such as memory 150 shown in FIG. 1. The computer software program can include machine instructions that may be executed by a processor, such as processor 160 shown in FIG. 1, and may cause the device to decode video data as described herein. Decoder 500 can be implemented as specialized hardware included, for example, in computing device 100.

Decoder 500 may receive a compressed bitstream 502, such as compressed bitstream 404 shown in FIG. 4, and may decode compressed bitstream 502 to generate an output video stream 504. Decoder 500 as shown includes an entropy decoding unit 510, a dequantization unit 520, an inverse transform unit 530, an intra/inter prediction unit 540, a reconstruction unit 550, a loop filtering unit 560, a deblocking filtering unit 570, or any combination thereof. Other structural variations of decoder 500 can be used to decode compressed bitstream 502.

Entropy decoding unit 510 may decode data elements within compressed bitstream 502 using, for example, Context Adaptive Binary Arithmetic Decoding, to produce a set of quantized transform coefficients. Dequantization unit 520 can dequantize the quantized transform coefficients, and inverse transform unit 530 can inverse transform the dequantized transform coefficients to produce a derivative residual block, which may correspond with the derivative residual block generated by inverse transformation unit 460 shown in FIG. 4. Using header information decoded from compressed bitstream 502, intra/inter prediction unit 540 may generate a prediction block corresponding to the prediction block created in encoder 400. At reconstruction unit 550, the prediction block can be added to the derivative residual block to create a reconstructed block. Loop filtering unit 560 can be applied to the reconstructed block to reduce blocking artifacts. Deblocking filtering unit 570 can be applied to the reconstructed block to reduce blocking distortion, and the result may be output as output video stream 504.

Other variations of decoder 500 can be used to decode compressed bitstream 502. For example, decoder 500 can produce output video stream 504 without deblocking filtering unit 570.

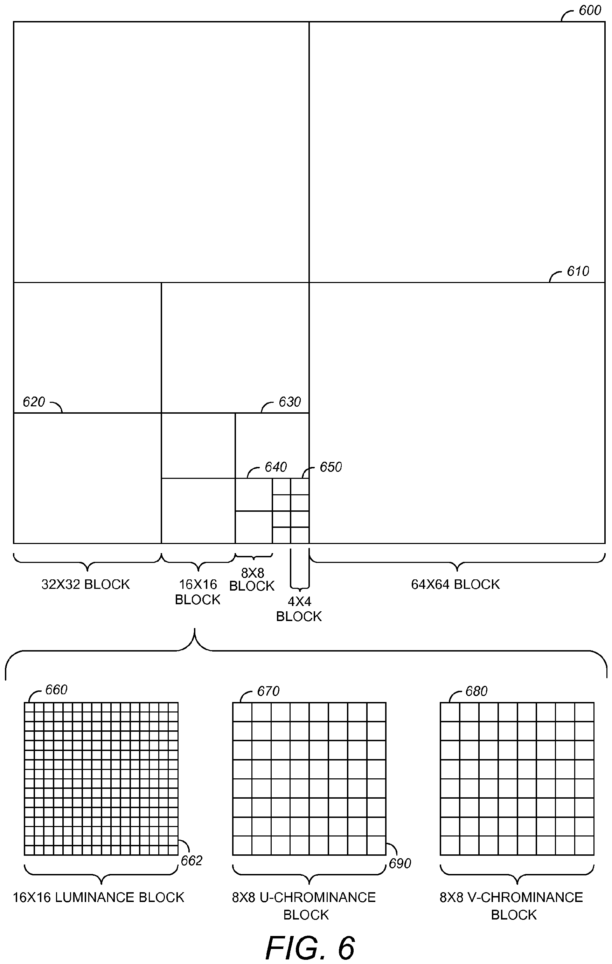

FIG. 6 is a block diagram of a representation of a portion 600 of a frame, such as frame 330 shown in FIG. 3, in accordance with implementations of this disclosure. As shown, portion 600 includes four 64x64 blocks 610, in two rows and two columns in a matrix or Cartesian plane. In some implementations, a 64x64 block may be a maximum coding unit, N=64. Each 64x64 block may include four 32x32 blocks 620. Each 32x32 block may include four 16x16 blocks 630. Each 16x16 block may include four 8x8 blocks 640. Each 8x8 block 640 may include four 4x4 blocks 650. Each 4x4 block 650 may include 16 pixels, which are represented in four rows and four columns in each respective block in the Cartesian plane or matrix. The pixels may include information representing an image captured in the frame, such as luminance information, color information, and location information. In some implementations, a block, such as a 16x16 pixel block as shown, may include a luminance block 660, which includes luminance pixels 662; and two chrominance blocks 670/680, such as a U or Cb chrominance block 670, and a V or Cr chrominance block 680. The chrominance blocks 670/680 include chrominance pixels 690. For example, luminance block 660 includes 16x16 luminance pixels 662, and each chrominance block 670/680 includes 8x8 chrominance pixels 690 as shown. Although one arrangement of blocks is shown, any arrangement may be used. For example, although FIG. 6 shows NxN blocks, NxM blocks may be used in some implementations. For example, blocks having 32x64, 64x32, 16x32, or 32x16 pixels, or any other size may be used. Thus, Nx2N blocks, 2NxN blocks, or a combination thereof may be used.

According to the teachings herein, video coding includes ordered block-level coding. Ordered block-level coding includes coding blocks of a frame in an order, such as raster-scan order, wherein blocks may be identified and processed starting with a block in the upper left corner of the frame, or portion of the frame, and proceeding along rows from left to right and from the top row to the bottom row, identifying each block in turn for processing. For example, the 64x64 block in the top row and left column of a frame may be the first block coded and the 64x64 block immediately to the right of the first block may be the second block coded. The second row from the top may be the second row coded, such that the 64x64 block in the left column of the second row may be coded after the 64x64 block in the rightmost column of the first row.

Quad-tree coding, which includes coding smaller block units within a block in raster-scan order, may be included. For example, the 64x64 block shown in the bottom left corner of the portion of the frame shown in FIG. 6 may be coded using quad-tree coding wherein the top left 32x32 block is coded, then the top right 32xz32 block is coded, then the bottom left 32x32 block is coded, and then the bottom right 32x32 block is coded. Each 32x32 block may be coded using quad-tree coding wherein the top left 16x16 block is coded, then the top right 16x16 block is coded, then the bottom left 16x16 block is coded, and then the bottom right 16x16 block is coded. Each 16x16 block may be coded using quad-tree coding wherein the top left 8x8 block is coded, then the top right 8x8 block is coded, then the bottom left 8x8 block is coded, and then the bottom right 8x8 block is coded. Each 8x8 block may be coded using quad-tree coding wherein the top left 4x4 block is coded, then the top right 4x4 block is coded, then the bottom left 4x4 block is coded, and then the bottom right 4x4 block is coded. In some implementations, 8x8 blocks may be omitted for a 16x16 block, and the 16x16 block may be coded using quad-tree coding wherein the top left 4x4 block is coded, and then the other 4x4 blocks in the 16x16 block are coded in raster-scan order.

The information included in an original, or input, frame may be compressed by, for example, omitting some of the information in the original frame from a corresponding encoded frame. For example, coding may include reducing spectral redundancy, reducing spatial redundancy, reducing temporal redundancy, or a combination thereof.

In some implementations, reducing spectral redundancy may include using a color model based on a luminance component (Y) and two chrominance components (U and V or Cb and Cr), which may be referred to as the YUV or YCbCr color model, or color space. Using the YUV color model may include using a relatively large amount of information to represent the luminance component of a portion of a frame, and using a relatively small amount of information to represent each corresponding chrominance component for the portion of the frame. For example, a portion of a frame may be represented by a high resolution luminance component, which may include a 16x16 block of pixels, and by two lower resolution chrominance components, each of which represents the portion of the frame as an 8x8 block of pixels. A pixel indicates a value, for example, a value in the range from 0 to 255, and may be stored or transmitted using, for example, eight bits. Although this disclosure is described in reference to the YUV color model, any color model may be used.

Reducing spatial redundancy may also include transforming a block into the frequency domain using, for example, a discrete cosine transform (DCT). For example, a unit of an encoder, such as the transform unit 420 shown in FIG. 4, may perform a DCT using transform coefficient values based on spatial frequency.

Reducing temporal redundancy may use similarities between frames to encode a frame using a relatively small amount of data based on one or more reference frames that are previously encoded, decoded, and reconstructed frames of the video stream. For example, a block or pixel of a current frame may be similar to a spatially corresponding block or pixel of a reference frame. In some implementations, a block or pixel of a current frame may be similar to block or pixel of a reference frame at a different spatial location. Motion information indicating the spatial difference, or translation, between the location of the block or pixel in the current frame and corresponding location of the block or pixel in the reference frame is then generated.

Reducing temporal redundancy may also include identifying a block or pixel in a reference frame, or a portion of the reference frame, that corresponds with a current block or pixel of a current frame. For example, a reference frame, or a portion of a reference frame, which may be stored in memory, is searched for the best block or pixel to use for encoding a current block or pixel of the current frame. The search may identify the block of the reference frame for which the difference in pixel values between the reference block and the current block is minimized, and may be referred to as motion searching. The portion of the reference frame searched may be limited. In one example, the portion of the reference frame searched, which may be referred to as the search area, includes a limited number of rows of the reference frame. In any event, identifying the reference block may include calculating a cost function, such as a sum of absolute differences (SAD), between the pixels of the blocks in the search area and the pixels of the current block.

The spatial difference between the location of the reference block in the reference frame and the current block in the current frame may be represented as a motion vector. The difference in pixel values between the reference block and the current block is generally referred to as differential data, residual data, or as a residual block. Generating motion vectors is also referred to as motion estimation. More specifically, a pixel of a current block may be indicated based on location using Cartesian coordinates as *f*_{x,y}. Similarly, a pixel of the search area of the reference frame may be indicated based on location using Cartesian coordinates as *r*_{x,y}. The motion vector (MV) for the current block is then determined based on, for example, a SAD between the pixels of the current frame and the corresponding pixels of the reference frame.

Although motion-compensated partitioning is described herein with reference to matrix or Cartesian representation of a frame for clarity, a frame may be stored, transmitted, processed, or any combination thereof, in any data structure such that pixel values may be efficiently predicted for a frame or image. For example, a frame may be stored, transmitted, processed, or any combination thereof, in a two dimensional data structure such as a matrix as shown, or in a one dimensional data structure, such as a vector array. A representation of the frame, such as a two dimensional representation as shown, may correspond to a physical location in a rendering of the frame as an image. For example, a location in the top left corner of a block in the top left corner of the frame may correspond with a physical location in the top left corner of a rendering of the frame as an image.

The content captured within a block may include two or more areas that exhibit distinct spatial and temporal characteristics. For example, a frame may capture multiple objects moving in various directions and speeds, and a block may include an edge or object boundary. In some implementations, block based coding efficiency may be improved by partitioning blocks that include multiple areas with distinct characteristics into one or more partitions, which may be rectangular, including square, partitions, corresponding to the distinct content, and encoding the partitions rather than encoding each minimum coding unit independently.

In some implementations, video coding using partitioning may include selecting a partitioning scheme from among multiple candidate partitioning schemes. For example, candidate partitioning schemes for a 64x64 coding unit may include rectangular size partitions ranging in sizes from 4x4 pixels to 64x64 pixels, such as 4x4, 4x8, 8x4, 8x8, 8x16, 16x8, 16x16, 16x32, 32x16, 32x32, 32x64, 64x32, or 64x64 pixels. In some implementations, video coding using partitioning may include a full partition search, which may include selecting a partitioning scheme by encoding the coding unit using each available candidate partitioning scheme and selecting the best scheme, such as the scheme that produces the least rate-distortion error.
When using partitioning, such as offline two-pass encoding, information regarding motion between frames may be generated in a first coding pass, and may be utilized to select a partitioning scheme in a second coding pass. Techniques such as offline two-pass encoding and evaluating rate-distortion error, or other similar metrics, for each candidate partitioning scheme, may be time-consuming, and may utilize more than half of the encoding time. In implementations that involve video conferencing or other content that includes a static background, a partitioning scheme may be selected based on the difference between previous and current source frames. In some implementations, encoding a video frame using motion-compensated partitioning may identify a partitioning scheme more efficiently than full partition searching, offline two-pass encoding, or partitioning based on inter-frame differences.

In some implementations, encoding a video frame using motion-compensated partitioning includes identifying a partitioning scheme for encoding a current block, such as block 610. Identifying a partitioning scheme may include determining whether to encode the block as a single partition of maximum coding unit size, which may be 64x64 as shown, or to partition the block into multiple partitions, which correspond with the sub-blocks, such as the 32x32 blocks 620 the 16x16 blocks 630, or the 8x8 blocks 640, as shown, and may include determining whether to partition into one or more smaller partitions. For example, a 64x64 block may be partitioned into four 32x32 partitions. Three of the four 32x32 partitions may be encoded as 32x32 partitions and the fourth 32x32 partition may be further partitioned into four 16x16 partitions. Three of the four 16x16 partitions may be encoded as 16x16 partitions and the fourth 16x16 partition may be further partitioned into four 8x8 partitions, each of which may be encoded as an 8x8 partition. Identifying the partitioning scheme may include using a partitioning decision tree.

In some implementations, video coding for a current block includes identifying an optimal coding mode from multiple candidate coding modes, which provides flexibility in handling video signals with various statistical properties and improves compression efficiency. For example, a video coder evaluates each candidate coding mode to identify the optimal coding mode, which may be, for example, the coding mode that minimizes an error metric, such as a rate-distortion cost, for the current block. The complexity of searching the candidate coding modes may be reduced by limiting the set of available candidate coding modes based on similarities between the current block and a corresponding prediction block. In some implementations, the complexity of searching each candidate coding mode is reduced by performing a directed refinement mode search. For example, metrics may be generated for a limited set of candidate block sizes, such as 16x16, 8x8, and 4x4, and the error metric associated with each block size may be arranged in descending order. Additional candidate block sizes, such as 4x8 and 8x4 block sizes, may be evaluated.

In some implementations, alternating block constrained decision mode coding includes alternating between an unconstrained decision mode, wherein the set of candidate coding modes is fully searched, and a constrained mode, wherein the set of candidate coding modes to be searched is limited. The alternating may be spatial, temporal, or both spatial and temporal. Spatial alternating may include alternating between constrained and unconstrained modes among immediately adjacent, neighboring, blocks. Spatial alternating may be vertical, horizontal, or both. For example, the alternating may be represented as a checkerboard, or chessboard, pattern. Temporal alternating may include alternating between constrained and unconstrained modes among immediately adjacent frames.

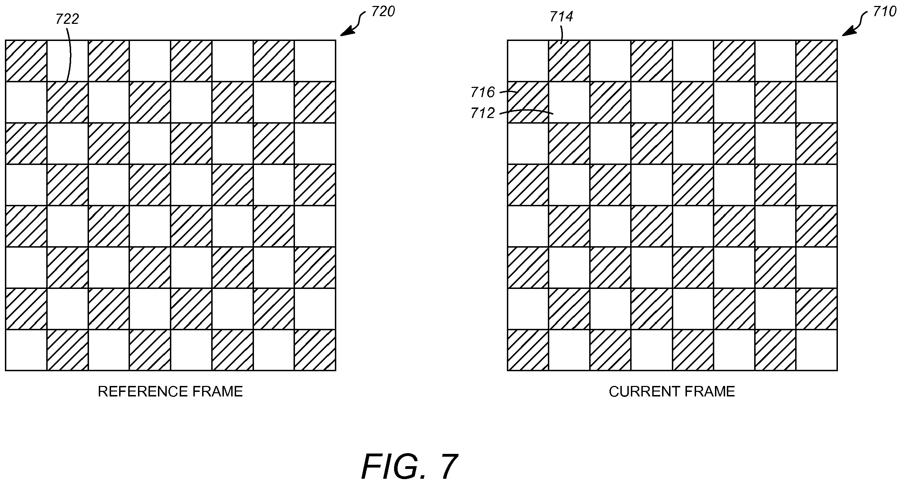

FIG. 7 is a diagram of an example of a representation of frames using spatial and temporal alternating block constrained mode video coding in accordance with implementations of this disclosure. As mentioned, alternating block constrained mode video coding may include alternating between coding blocks in an unconstrained coding mode and coding blocks in a constrained coding mode. For example, unconstrained coding mode blocks are shown in black and constrained coding mode blocks are shown in white. Alternating block constrained mode video coding may include spatial alternating block constrained mode video coding, temporal alternating block constrained mode video coding, or a combination thereof. In some implementations, alternating block constrained mode video coding may include coding a current video frame. For example, FIG. 7 shows a portion of a current frame 710. Although an 8x8 portion of a current frame 710 is shown in FIG. 7, a frame may include any number of blocks, and each block may include any number of pixels.

Spatial alternating block constrained mode video coding may include determining a coding mode for a current block based on a coding mode of one or more spatially adjacent previously coded blocks. For example, as shown in FIG. 7, current frame 710 includes a current block 712, a first neighbor block 714, and a second neighbor block 716. A coding mode for current block 712 may be identified based on a coding mode of spatially immediately adjacent blocks 714/716. For example, as shown, first neighbor block 714 is immediately above current block 712, and second neighbor block 716 is immediately to the left of current block 712.

Temporal alternating block constrained mode video coding may include determining a coding mode for a current block based on a coding mode of one or more spatially adjacent previously coded blocks and one or more temporally adjacent spatially concurrent previously coded blocks. For example, as shown in FIG. 7, a reference frame 720 includes a reference block 722. Reference frame 720 may be spatially adjacent to current frame 710, and a reference block 722 in reference frame 720, may be spatially concurrent with current block 712.

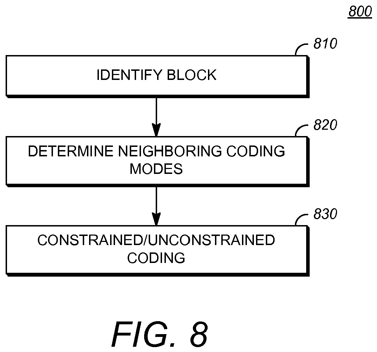

FIG. 8 is a diagram of an example of a method of spatial and temporal alternating block constrained mode video coding in accordance with implementations of this disclosure. An encoder, such as encoder 400 shown in FIG. 4, may receive an input video stream, such as input video stream 402 shown in FIG. 4, may encode the input video stream, such as the encoding shown in FIG. 4, and may output an encoded video stream, such as compressed bitstream 404 shown in FIG. 4. In some implementations, encoding the video stream includes spatial and temporal alternating block constrained mode video coding 800. As shown in the example of FIG. 8, spatial and temporal alternating block constrained mode video coding 800 includes identifying a current block at 810, determining neighboring coding modes at 820, and constrained or unconstrained coding at 830.

A current block is identified at 810. In some implementations, a current frame of the input, or source, video stream includes multiple NxN blocks, such as 16x16 blocks, and a block from the current frame is identified as the current block. For example, a frame, such as frame 710 shown in FIG. 7, is identified as the current frame, and a block, such as block 712 shown in FIG. 7, is identified as the current block. Each block from the source frame may be coded on a block-by-block basis. In some implementations, block-based coding includes encoding a block using hierarchical coding, such as quad-tree coding. In one example, the current block is a 64x64 block, and encoding the current block included encoding one or more sub-blocks, such as one or more of blocks 610-650 shown in FIG. 6.

Neighboring coding modes are identified or determined at 820. In some implementations, this includes identifying the coding mode used for encoding the neighboring blocks, identifying the coding decision mode used for the neighboring blocks, or both. A coder, such as the encoder 400 shown in FIG. 4, may determine whether the blocks neighboring the current block, which may be previously coded bocks, were coded as constrained decision mode blocks or unconstrained decision mode blocks. The coder may store a bit, or flag, indicating whether the previously coded block was coded as a constrained decision mode block or an unconstrained decision mode block, and identifying or determining the neighboring coding modes may include evaluating the flag.

Constrained or unconstrained decision mode coding is performed at 830. In some implementations, performing constrained or unconstrained decision mode coding includes determining, based on the coding decision mode for the neighboring blocks, whether to perform constrained decision mode coding or unconstrained decision mode coding. For example, the block immediately above the current block in the current frame, the block immediately to the left of the current block in the current frame, or both, may be unconstrained decision mode coded blocks, and the current block may be coded using constrained decision mode coding. In another example, the block immediately above the current block in the current frame, the block immediately to the left of the current block in the current frame, or both, may be constrained decision mode coded blocks, and the current block may be coded using unconstrained decision mode coding.

Unconstrained decision mode coding may include generating a motion compensated reference block by identifying a reference block from a reference frame, and filtering the reference block using a spatial filter selected from a set of candidate spatial filters. The selected spatial filter may be identified using a full search, such as a rate-distortion optimization mode search. A full search may include applying each candidate spatial filter from the set of candidate spatial filters to the reference block to generate a set of candidate motion compensated reference blocks, determining a residual for each candidate motion compensated reference block, and selecting the spatial filter associated with the residual having the minimal prediction error. In some implementations, unconstrained decision mode coding includes a partial full search. For example, a rate-distortion optimization mode search may be terminated, such that evaluation of one or more of the candidate search types is omitted, based on metrics indicating similarities between the current block and the prediction block.

One or more reference blocks may be unavailable in unconstrained decision mode so that coding includes using available reference blocks. For example, the current block may be the top left block of the frame, so a reference block above the current block in the current frame and a reference block to the left of the current block in the current frame are unavailable. In such a case, unconstrained decision mode coding may use the prediction mode from a collocated block from the previous frame. In another example, the current block may be a block from the left most column such that a reference block to the left of the current block in the current frame is unavailable. In this case, unconstrained decision mode coding may use the prediction mode from a reference block above the current block in the current frame and the prediction mode from a collocated block from the previous frame. In another example, the current block may be a block from the top most row of the current frame, so a reference block above the current block in the current frame is unavailable. In this case, unconstrained decision mode coding may use the prediction mode from a reference block to the left of the current block in the current frame and the prediction mode from a collocated block from the previous frame.

Constrained decision mode coding may also include identifying a prediction filter, which may be a spatial filter, based on the prediction filters used for encoding the neighboring blocks. For example, constrained decision mode coding includes determining whether the prediction filters used for encoding the neighboring blocks match. The selected prediction filter type may match the neighboring blocks. For example, where the set of candidate spatial filters includes N filter types, the neighboring block above the current block can be encoded using the Nth filter type, the neighboring block to the left of the current block can be encoded using the Nth filter type, the filter search may be omitted, and the current block can be encoded using the Nth filter type. In other implementations, the neighboring filter types differ, and the filter is selected using a full search or a reduced candidate set search. For example, where the set of candidate spatial filters includes N filter types, the neighboring block above the current block can be encoded using the first filter type, the neighboring block to the left of the current block can be encoded using the second filter type, and a reduced candidate set search includes searching using the first filter type and the second filter type. In some situations, a reduced candidate set search includes searching one or more similar filter types. For example, the set of candidate spatial filters includes N filter types, the neighboring block above the current block is encoded using the first filter type, the neighboring block to the left of the current block is encoded using the second filter type, the candidate set include a third filter type that is similar to the first filter type and the second filter type, and a reduced candidate set search includes searching using the first filter type, the second filter type, and the third filter type.

Unconstrained decision mode coding can include a rate-distortion optimization search. For example, the rate-distortion optimization search includes a block size search to identify a set of sub-blocks to code as distinct units within the current block. In some implementations, a block size search includes evaluating a set of candidate block sizes to identify a set of sub-blocks, within the current block, that may each be coded as a distinct unit. For example, the current block may be a 64x64 block, such as 64x64 block 610 shown in FIG. 6, and a set of candidate block sizes, such as the square blocks 620-650, or rectangular blocks. For example, blocks having dimensions 4x4, 4x8, 8x4, 8x8, 8x16, 16x8, 16x16, 16x32, 32x16, 32xz32, 32x64, 64x32, and 64x64 may be searched. A directed refinement mode block size search based on the neighboring block sizes can also be included. For example, the block above the current block may use an 8x16 partition size, the block to the left of the current block may use a 16x16 partition size, and unconstrained decision mode coding may include searching similarly sized units, such as 8x8, 16x8, 8x16, 16x16 partition sizes.

In some implementations, constrained decision mode coding includes a contextual rate-distortion optimization search, which includes identifying a minimum coding block size and a maximum coding block size from among the neighboring block spatially above the current block in the current frame, the neighboring block spatially to the left of the current block in the current frame, and the neighboring block spatially concurrent with the current block in a temporally adjacent previously coded frame. A contextual rate-distortion optimization search can include searching a reduced set of candidate block sizes. For example, the search may omit candidate block sizes smaller than the minimum coding block size from the neighboring blocks and candidate block sizes larger than the maximum coding block size from the neighboring blocks.

Other implementations of the diagrams of alternating block constrained mode video coding as shown in FIGS. 7 and 8 are available. Additional elements of alternating block constrained mode video coding can be added, certain elements can be combined, and/or certain elements can be removed.

The words "example" or "exemplary" are used herein to mean serving as an example, instance, or illustration. Any aspect or design described herein as "example" or "exemplary" not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an embodiment" or "one embodiment" or "an implementation" or "one implementation" throughout is not intended to mean the same embodiment or implementation unless described as such. As used herein, the terms "determine" and "identify", or any variations thereof, includes selecting, ascertaining, computing, looking up, receiving, determining, establishing, obtaining, or otherwise identifying or determining in any manner whatsoever using one or more of the devices shown in FIG. 1.

Further, for simplicity of explanation, although the figures and descriptions herein may include sequences or series of steps or stages, elements of the methods disclosed herein can occur in various orders and/or concurrently. Additionally, elements of the methods disclosed herein may occur with other elements not explicitly presented and described herein. Furthermore, not all elements of the methods described herein may be required to implement a method in accordance with the disclosed subject matter.

The implementations of transmitting station 100A and/or receiving station 100B (and the algorithms, methods, instructions, etc. stored thereon and/or executed thereby) can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors or any other suitable circuit. In the claims, the term "processor" should be understood as encompassing any of the foregoing hardware, either singly or in combination. The terms "signal" and "data" are used interchangeably. Further, portions of transmitting station 100A and receiving station 100B do not necessarily have to be implemented in the same manner.

Further, in one implementation, for example, transmitting station 100A or receiving station 100B can be implemented using a general purpose computer or general purpose processor with a computer program that, when executed, carries out any of the respective methods, algorithms and/or instructions described herein. In addition or alternatively, for example, a special purpose computer/processor can be utilized which can contain specialized hardware for carrying out any of the methods, algorithms, or instructions described herein.

Transmitting station 100A and receiving station 100B can, for example, be implemented on computers in a real-time video system. Alternatively, transmitting station 100A can be implemented on a server and receiving station 100B can be implemented on a device separate from the server, such as a hand-held communications device. In this instance, transmitting station 100A can encode content using an encoder 400 into an encoded video signal and transmit the encoded video signal to the communications device. In turn, the communications device can then decode the encoded video signal using a decoder 500. Alternatively, the communications device can decode content stored locally on the communications device, for example, content that was not transmitted by transmitting station 100A. Other suitable transmitting station 100A and receiving station 100B implementation schemes are available. For example, receiving station 100B can be a generally stationary personal computer rather than a portable communications device and/or a device including an encoder 400 may also include a decoder 500.

Further, all or a portion of implementations can take the form of a computer program product accessible from, for example, a tangible computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described implementations have been described in order to allow easy understanding of the application are not limiting. On the contrary, the application covers various modifications and equivalent arrangements included within the scope of the appended claims, which scope is to be accorded the broadest interpretation so as to encompass all such modifications and equivalent structure as is permitted under the law.

## Claims

1. A video coding method comprising:
identifying a current block of a current frame of an input video stream (300);
generating, by a processor (140) in response to instructions (160) stored on a non-transitory computer readable medium, an encoded block (712) by encoding the current block using alternating block constrained decision mode coding, wherein alternating block constrained decision mode coding includes:
encoding the current block (712) as a constrained decision mode coded block on a condition that, a first previously coded immediately adjacent block (714,716) is an unconstrained decision mode coded block, wherein the first previously coded immediately adjacent block (714,716) is a previously coded block spatially immediately to the left of the current block (712) in the current frame, a second previously coded immediately adjacent block is an unconstrained decision mode coded block, wherein the second previously coded immediately adjacent block is a previously coded block spatially immediately above the current block (712) in the current frame (710), and a third previously coded immediately adjacent block (714, 716) is an unconstrained decision mode coded block, wherein the third previously coded immediately adjacent block (714,716) is collocated with the current block (712) and the third previously coded immediately adjacent block (714,716) is from a temporally immediately adjacent previously coded frame; and
including the encoded block in an output bitstream,
wherein in constrained decision mode a set of candidate coding modes to be searched is limited and in unconstrained decision mode the set of candidate coding modes is fully searched,
wherein encoding the current block (712) as a constrained decision mode coded block comprises:
encoding the current block (712) using a prediction filter identified based on the first previously coded immediately adjacent block and the second previously coded immediately adjacent block (714,716), wherein the prediction filter is a filter for generating a motion compensated prediction block; and
encoding the current block (712) using a coding block size range identified based on the first previously coded immediately adjacent block, the second previously coded immediately adjacent block, and the third previously coded immediately adjacent block.

2. The method of claim 1, wherein alternating block constrained decision mode coding includes encoding the current block (712) as an unconstrained decision mode coded block on a condition that:
the first previously coded immediately adjacent block is a constrained decision mode coded block,
the second previously coded immediately adjacent block is a constrained decision mode coded block, and
the third previously coded immediately adjacent block is a constrained decision mode coded block.

3. The method of claim 1, wherein encoding the current block (712) using the prediction filter includes:
identifying a first candidate prediction filter used for coding the first previously coded immediately adjacent block;
identifying a second candidate prediction filter used for coding the second previously coded immediately adjacent block;
on a condition that the first candidate prediction filter matches the second candidate prediction filter, selecting the first candidate prediction filter as the prediction filter; and
on a condition that the first candidate prediction filter differs from the second candidate prediction filter, selecting the prediction filter from a set of available prediction filters.

4. The method of claim 1, wherein encoding the current block (712) using the coding block size range includes:
identifying a minimum coding block size, wherein the minimum coding block size is the smallest coding block size among the first previously coded immediately adjacent block, the second previously coded immediately adjacent block, and the third previously coded immediately adjacent block;
identifying a maximum coding block size, wherein the maximum coding block size is the largest coding block size among the first previously coded immediately adjacent block, the second previously coded immediately adjacent block, and the third previously coded immediately adjacent block; and
selecting the minimum coding block size as a lower limit of the coding block size range and the maximum coding block size as an upper limit of the coding block size range.

5. A computer program product comprising instructions which, when the program is executed by a computer, cause the computer to carry out the method of any previous claim.

## Patentansprüche

1. Videocodierverfahren, umfassend:
Identifizieren eines aktuellen Blocks eines aktuellen Einzelbildes eines Eingangs-Videostroms (300);
Erzeugen eines codierten Blocks (712) durch einen Prozessor (140) als Reaktion auf Befehle (160), die auf einem nichtflüchtigen computerlesbaren Medium gespeichert sind, durch Codieren des aktuellen Blocks unter Verwendung von abwechselndem Block-Codieren im Modus mit beschränkter Entscheidung, worin das abwechselnde Block-Codieren im Modus mit beschränkter Entscheidung umfasst:
Codieren des aktuellen Blocks (712) als einen im Modus mit beschränkter Entscheidung codierten Block unter einer Bedingung, dass ein erster zuvor codierter unmittelbar angrenzender Block (714, 716) ein im Modus mit unbeschränkter Entscheidung codierter Block ist, worin der erste zuvor codierte unmittelbar angrenzende Block (714, 716) ein zuvor codierter Block ist, der im aktuellen Einzelbild räumlich unmittelbar links vom aktuellen Block (712) liegt, ein zweiter zuvor codierter unmittelbar angrenzender Block ein im Modus mit unbeschränkter Entscheidung codierter Block ist, worin der zweite zuvor codierte unmittelbar angrenzende Block ein zuvor codierter Block ist, der im aktuellen Einzelbild (710) räumlich unmittelbar über dem aktuellen Block (712) liegt, und ein dritter zuvor codierter unmittelbar angrenzender Block (714, 716) ein im Modus mit unbeschränkter Entscheidung codierter Block ist, worin der dritte zuvor codierte unmittelbar angrenzende Block (714, 716) an der gleichen Stelle wie der aktuelle Block (712) liegt und der dritte zuvor codierte unmittelbar angrenzende Block (714, 716) aus einem zeitlich unmittelbar angrenzenden zuvor codierten Einzelbild stammt; und
Einbeziehen des codierten Blocks in einen Ausgabe-Bitstrom,
worin im Modus mit beschränkter Entscheidung eine Menge von zu durchsuchenden Codiermodus-Kandidaten begrenzt ist und im Modus mit unbeschränkter Entscheidung die Menge von Codiermodus-Kandidaten vollständig durchsucht wird,
worin das Codieren des aktuellen Blocks (712) als einen im Modus mit beschränkter Entscheidung codierten Block umfasst:
Codieren des aktuellen Blocks (712) unter Verwendung eines Vorhersagefilters, der auf der Grundlage des ersten zuvor codierten unmittelbar angrenzenden Blocks und des zweiten zuvor codierten unmittelbar angrenzenden Blocks (714, 716) bestimmt wird, worin der Vorhersagefilter ein Filter zum Erzeugen eines Blocks mit bewegungskompensierter Vorhersage ist; und
Codieren des aktuellen Blocks (712) unter Verwendung eines Codierblockgrößenbereichs, der auf der Grundlage des ersten zuvor codierten unmittelbar angrenzenden Blocks, des zweiten zuvor codierten unmittelbar angrenzenden Blocks und des dritten zuvor codierten unmittelbar angrenzenden Blocks bestimmt wird.

2. Verfahren nach Anspruch 1, worin das abwechselnde Block-Codieren im Modus mit beschränkter Entscheidung einschließt: Codieren des aktuellen Blocks (712) als einen im Modus mit unbeschränkter Entscheidung codierten Block unter einer Bedingung, dass:
der erste zuvor codierte unmittelbar angrenzende Block ein im Modus mit beschränkter Entscheidung codierter Block ist,
der zweite zuvor codierte unmittelbar angrenzende Block ein im Modus mit beschränkter Entscheidung codierter Block ist, und
der dritte zuvor codierte unmittelbar angrenzende Block ein im Modus mit beschränkter Entscheidung codierter Block ist.

3. Verfahren nach Anspruch 1, worin das Codieren des aktuellen Blocks (712) unter Verwendung des Vorhersagefilters einschließt:
Bestimmen eines ersten Vorhersagefilter-Kandidaten, der zum Codieren des ersten zuvor codierten unmittelbar angrenzenden Blocks verwendet wurde;
Bestimmen eines zweiten Vorhersagefilter-Kandidaten, der zum Codieren des zweiten zuvor codierten unmittelbar angrenzenden Blocks verwendet wurde;
unter einer Bedingung, dass der erste Vorhersagefilter-Kandidat mit dem zweiten Vorhersagefilter-Kandidaten übereinstimmt, erfolgendes Auswählen des ersten Vorhersagefilter-Kandidaten als den Vorhersagefilter; und
unter einer Bedingung, dass der erste Vorhersagefilter-Kandidat sich vom zweiten Vorhersagefilter-Kandidaten unterscheidet, erfolgendes Auswählen des Vorhersagefilters aus einer Menge von verfügbaren Vorhersagefiltern.

4. Verfahren nach Anspruch 1, worin das Codieren des aktuellen Blocks (712) unter Verwendung des Codierblockgrößenbereichs einschließt:
Bestimmen einer minimalen Codierblockgröße, worin die minimale Codierblockgröße die kleinste Codierblockgröße unter dem ersten zuvor codierten unmittelbar angrenzenden Block, dem zweiten zuvor codierten unmittelbar angrenzenden Block und dem dritten zuvor codierten unmittelbar angrenzenden Block ist;
Bestimmen einer maximalen Codierblockgröße, worin die maximale Codierblockgröße die größte Codierblockgröße unter dem ersten zuvor codierten unmittelbar angrenzenden Block, dem zweiten zuvor codierten unmittelbar angrenzenden Block und dem dritten zuvor codierten unmittelbar angrenzenden Block ist; und
Auswählen der minimalen Codierblockgröße als Untergrenze des Codierblockgrößenbereichs und der maximalen Codierblockgröße als Obergrenze des Codierblockgrößenbereichs.

5. Computerprogrammprodukt, das Befehle umfasst, die, wenn das Programm durch einen Computer ausgeführt wird, den Computer veranlassen, das Verfahren nach einem der vorhergehenden Ansprüche auszuführen.

## Revendications

1. Procédé de codage vidéo comprenant:
l'identification d'un bloc actuel d'une image actuelle d'un flux vidéo d'entrée (300);
la génération, par un processeur (140) en réponse aux instructions (160) stockées sur un support non transitoire lisible par ordinateur, d'un bloc encodé (712) en encodant le bloc actuel en utilisant un codage en mode de décision restreinte par blocs alternés, le codage en mode de décision restreinte par blocs alternés incluant:
l'encodage du bloc actuel (712) en tant que bloc codé en mode de décision restreinte à condition que, un premier bloc immédiatement adjacent précédemment codé (714, 716) soit un bloc codé en mode de décision non restreinte, le premier bloc immédiatement adjacent précédemment codé (714, 716) étant un bloc codé précédemment spatialement immédiatement à la gauche du bloc actuel (712) dans l'image actuelle, un second bloc immédiatement adjacent précédemment codé étant un bloc codé en mode de décision non restreinte, le second bloc immédiatement adjacent précédemment codé étant un bloc précédemment codé spatialement immédiatement au-dessus du bloc actuel (712) dans l'image actuelle (710), et un troisième bloc immédiatement adjacent précédemment codé (714, 716) étant un bloc codé en mode de décision non restreinte, le troisième bloc immédiatement adjacent précédemment codé (714, 716) étant colocalisé avec le bloc actuel (712) et le troisième bloc immédiatement adjacent précédemment codé (714, 716) étant d'une image précédemment codée immédiatement adjacente temporellement; et
l'inclusion du bloc encodé dans un flux binaire de sortie,
dans le mode de décision restreinte, un ensemble de modes de codage candidats à rechercher étant limité et dans le mode de décision non restreinte l'ensemble de modes de codage candidats étant complètement recherché,
l'encodage du bloc actuel (712) en tant que bloc codé en mode de décision restreinte comprenant:
l'encodage du bloc actuel (712) en utilisant un filtre de prédiction identifié à partir du premier bloc immédiatement adjacent précédemment codé et du second bloc immédiatement adjacent précédemment codé (714, 716), le filtre de prédiction étant un filtre pour générer un bloc de prédiction compensé en mouvement; et
l'encodage du bloc actuel (712) en utilisant une gamme de tailles de bloc de codage identifiée à partir du premier bloc immédiatement adjacent précédemment codé, du second bloc immédiatement adjacent précédemment codé, et du troisième bloc immédiatement adjacent précédemment codé.

2. Procédé selon la revendication 1, le codage en mode de décision restreinte par bloc alterné incluant l'encodage du bloc actuel (712) en tant que bloc codé en mode de décision non restreinte à condition que:
le premier bloc immédiatement adjacent précédemment codé soit un bloc codé en mode de décision restreinte,
le second bloc immédiatement adjacent précédemment codé soit un bloc codé en mode de décision restreinte, et
le troisième bloc immédiatement adjacent précédemment codé soit un bloc codé en mode de décision restreinte.

3. Procédé selon la revendication 1, l'encodage du bloc actuel (712) en utilisant le filtre de prédiction incluant:
l'identification d'un premier filtre de prédiction candidat utilisé pour l'encodage du premier bloc immédiatement adjacent précédemment codé;
l'identification d'un second filtre de prédiction candidat utilisé pour l'encodage du second bloc immédiatement adjacent précédemment codé;
à condition que le premier filtre de prédiction candidat concorde avec le second filtre de prédiction candidat, la sélection du premier filtre de prédiction candidat en tant que filtre de prédiction; et
à condition que le premier filtre de prédiction candidat diffère du second filtre de prédiction candidat, la sélection du filtre de prédiction d'un ensemble de filtres de prédiction disponibles.

4. Procédé selon la revendication 1, l'encodage du bloc actuel (712) en utilisant la gamme de tailles de bloc de codage incluant:
l'identification d'une taille de bloc de codage minimale, la taille de bloc de codage minimale étant la taille de bloc de codage la plus petite parmi le premier bloc immédiatement adjacent précédemment codé, le second bloc immédiatement adjacent précédemment codé, et le troisième bloc immédiatement adjacent précédemment codé;
l'identification d'une taille de bloc de codage maximale, la taille de bloc de codage maximale étant la taille de bloc de codage la plus grande parmi le premier bloc immédiatement adjacent précédemment codé, le second bloc immédiatement adjacent précédemment codé, et le troisième bloc immédiatement adjacent précédemment codé; et
la sélection de la taille de bloc de codage minimale en tant que limite inférieure de la gamme de tailles de bloc de codage et de la taille de bloc de codage maximale en tant que limite supérieure de la gamme de tailles de bloc de codage.

5. Programme informatique comprenant des instructions qui, lorsque le programme est exécuté par un ordinateur, amènent l'ordinateur à effectuer le procédé selon l'une quelconque des revendications précédentes.
